# EUROPEAN PATENT APPLICATION

(11) **EP 2 075 737 A2**
(43) Date of publication of application: **01.07.2009**
(21) Application number: 08156420.5
(22) Date of filing: 19.05.2008
(51) Int. Cl.: G06F 21/24

(54) **Handling restriction information management system, handling restriction information management method and handling restriction information management program**

(30) Priority: 25.12.2007 JP 2007331604
(71) Applicant: Fuji Xerox Co., Ltd., Minato-ku, Tokyo (JP)
(72) Inventor: Katsurabayashi, Hiroshi, Takatsu-ku, Kawasaki-shi Kanagawa (JP)
(74) Representative: Hilleringmann, Jochen

(57) **Abstract**

A handling restriction intonation management system, which includes a document management apparatus which manages a document, and a document handling apparatus which acquires and handles the document managed by the document management apparatus, in which the document management apparatus includes a handling restriction information management section which, in correspondence with the transition of processing steps on a flow of a plurality of works utilizing a document, updates and manages handling restriction information for restricting the handling of the document, and a handling restriction information issuing section which, on the basis of a timing at which the document is acquired by the document handling apparatus, issues the handling restriction information managed by the handling restriction information management section to the document handling apparatus, and the document handing apparatus includes a handling restriction section which, on the basis of the handling restriction information issued by the handling restriction information issuing section, restricts the handling of the document.

## Description

### BACKGROUND

### Technical Field

The present invention relates to a handling restriction information management system, a handling restriction information management method, and a handling restriction information management program.

### Related Art

For securing the confidentiality of a document managed by a document management apparatus, a method which sets the handling authority for that document to restrict the permissible handling thereof, and a method which, in referencing a document, alters a particular portion (a phrase, or the like) into alternative characters are available, for example.

In addition, a method which, in case where printing handling for a document is permitted by the handling authority, and a printed matter which has been outputted by the printing handling is to be taken out, secures the confidentiality by managing the disposal state of that printed matter is available

In addition, in the related art disclosed in the Japanese Patent Application Laid-Open No. 2007-004435, handling authority for handling a document (confidential document) is set for each user based on the contents composing the document to be handled, and then the confidentiality of the document is secured by determining if or not the user is permitted to handle the document. Especially, the confidentiality is secured by limiting an extent for which the user can refer to the document according to the position or the appointment of the user, and converting specific words to other words.

In such a related art, if a handling authority for a document cannot be checked when the document is to be handled, the document may not be handled, or unintended handling may be executed.

### SUMMARY

The instant invention has been made in view of the above-mentioned circumferences and provides a handling restriction information management system, a handling restriction information management method, and a handling restriction information management program, which make it possible to restrict a different access on the basis of a timing at which the status of availability of the document was transited.

A first aspect of the instant invention provides a handling restriction management system, comprising: a document management apparatus which manages a document, and a document handling apparatus which acquires and handles the document managed by the document management apparatus, in which the document management apparatus includes: a handling restriction information management section which, in correspondence with the transition of processing steps on a flow of a plurality of works utilizing a document, updates and manages handling restriction information for restricting the handling of the document, and a handling restriction information issuing section which, on the basis of a timing at which the document was acquired by the document handling apparatus, issues the handling restriction information managed by the handling restriction information management section to the document handling apparatus, and the document handling apparatus includes a handling restriction section which, on the basis of the handling restriction information issued by the handling restriction information issuing section, restricts the handling of the document

A second aspect of the instant invention according to the first aspect provides the document management apparatus further including an updating history management section which manages an updating history of the handling restriction information managed by the handling restriction information management section.

A third aspect of the instant invention according to the second aspect provides the updating history management section which stores and manages updated content information which pertains to the update of the handling restriction information in correspondence to the handling restriction information managed by the handling restriction information management section; the handling restriction information issuing section which issues handling restriction information including the updated content information stored in the updating history management section, the document handling apparatus including a notification section which, on the basis of the updated content information included in the handling restriction information issued by the handling restriction information issuing section, notifies the update of the handling restriction information

A fourth aspect of the instant invention according to the third aspect provides the notification section which, when the handling restriction information for a specific handler is altered, on the basis of the updated content information, prepares alteration information indicating the alteration of the handling restriction information, and notifies it to the specific handler.

A fifth aspect of the instant invention according to the fourth aspect provides the document handling apparatus including a decryption section which, after having acquired an encrypted document from the document management apparatus, acquires handling restriction information including decryption information for decrypting the encrypted document issued by the handling restriction information issuing section of the document management apparatus, and decrypts the encrypted document on the basis of the decryption information included in the handling restriction information

A sixth aspect of the instant invention provides method, including: acquiring and handling a managed document; in correspondence with the transition of processing steps on the flow of work for a plurality of works utilizing a document,
updating and managing handling restriction information for restricting the handling of the document; on the basis of a timing at which the document was acquired, issuing the managed handling restriction information; and on the basis of the handling restriction information issued, restricting the handling of the document.

A seventh aspect of the instant invention provides a handling restriction information management program executable by a computer to perform a process, the process including: acquiring and handling a managed document; in correspondence with the transition of processing steps on the flow of work for a plurality of works utilizing a document, updating and managing handling restriction information for restricting the handling of the document; on the basis of a timing at which the document was acquired, issuing the managed handling restriction information; and on the basis of the handling restriction information issued, restricting the handling of the document.

According to the first aspect of the instant invention, different access restriction can be performed based on the timing at which the document is acquired.

According to the second aspect of the instant invention, an updating history due to the updating of the handling restriction information can be managed.

According to the third aspect of the instant invention, the update of the handling restriction information can be notified based on updated content information

According to the fourth aspect of the instant invention, updating of the handling restriction information can be notified by being altered updated content information, and the updated information can be checked as well.

According to the fifth aspect of the instant invention, the document in which the handling is restricted by decryption can be handled by handling restriction information including decryption information.

According to the sixth aspect of the instant invention, different access restriction can be performed based on the timing at which the document is acquired

According to the seventh aspect of the instant invention, different access restriction can be performed based on the timing at which the document is acquired.

### BRIEF DESCRIPTION OF THE DRAWING

An exemplary embodiment of the present invention will be described in detail based on the following figures, wherein:
FIG. 1 is one example of the system scheme of a handling restriction information management system in an embodiment of the present invention;
FIG. 2 is a schematic configuration diagram illustrating the overview of the handling restriction information management system in the embodiment of the present invention;
FIG 3 is a block diagram illustrating the detailed configuration of the handling restriction information management system in the embodiment of the present invention;
FIG. 4 is a diagram illustrating one example of workflow;
FIG. 5 is a table giving the information set for a document which is handled at respective processing steps on the workflow as shown in FIG. 4 in time series;
FIG. 6 is a table giving one example of handling restriction information in the handling restriction information management system in the embodiment of the present invention;
FIG. 7A and FIG. 7B are another tables giving the information set for a document which is handled at respective processing steps on the workflow as shown in FIG 4 in time series;
FIG. 8 is a sequence diagram illustrating the status transition of the handling restriction information management system in the embodiment of the present invention; and
FIG. 9 is a flowchart illustrating the details of the processing of setting the handling restriction information to be applied to the document in the handling restriction information management system in the embodiment of the present invention

### DETAILED DESCRIPTION

Hereinbelow, one exemplary embodiment of a handling restriction information management system, a handling restriction information management method, and a handling restriction information management program pertaining to the present invention will be described in detail with reference to the attached drawings

### Exemplary Embodiment

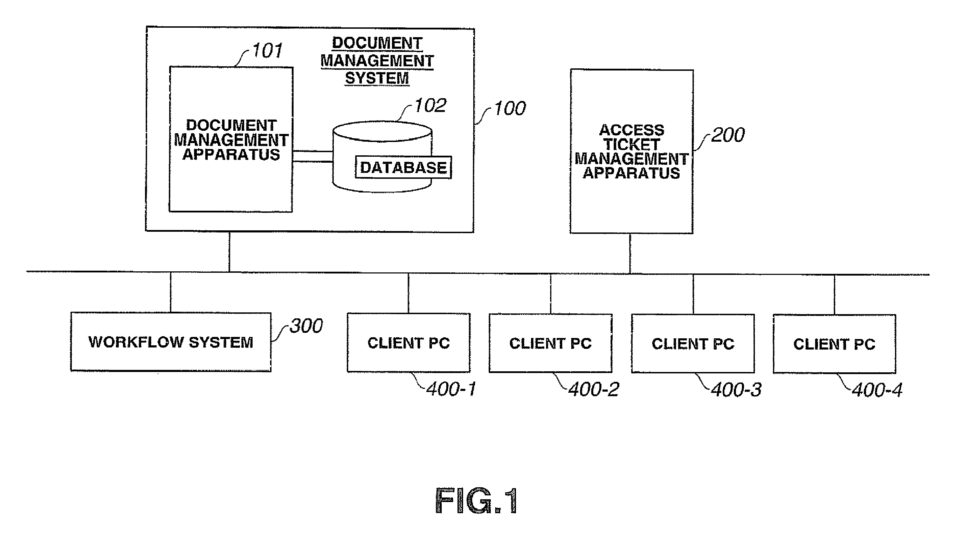

FIG. 1 gives one example of diagram illustrating the system scheme of the handling restriction information management system in an embodiment of the present invention.

In FIG. 1, the handling restriction information management system is configured to include a document management system 100, an access ticket management apparatus 200, a workflow system 300, and client PCs (400-1, 400-2, 400-3, 400-4) (hereafter to be collectively called a "client PC 400"),

The document management system 100 manages the document which a handle handles using the client PC on the basis of the workflow provided by the workflow system 300. Further, this document management system 100 manages the handling restriction information for each document that restricts the handling of that document according to the timing at which that document was acquired, and the handler handles the document on the basis of the handling restriction information for the acquisition timing

This acquisition timing indicates the timing at which the handler acquired the document from the document management system, using the client PC 400, and this acquisition timing is determined, depending upon the processing step on the workflow at the time when the document was acquired.

The client PC 400 is a terminal which the designated handler (also called the "user") operates at a processing step on the workflow provided by the workflow system 300, and the handler, after acquiring a document managed by the document management system 100, handles the document in order to carry out the processing specified in the processing steps on the workflow. At this time, handling of the document is performed on the basis of the handling restriction information which is managed for the timing at which the document was acquired from the document management system 100.

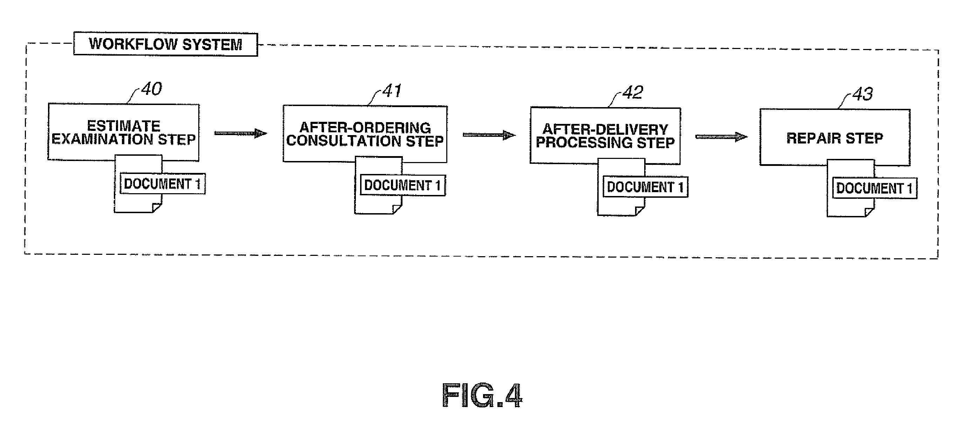

The workflow system 300 manages the workflow which indicates the flow of work for the multiple works utilizing a document, and is a system which allows the user to handle the document managed by the document management system 100 using the client PC 400 at each processing steps at which a particular work is carried out The workflow system may be composed of a singe apparatus or multiple apparatuses FIG. 4 shows one example of workflow.

For each processing step on the workflow, the contents of the handling which can be made by the user for a particular document vary, and the document management system 100 manages multiple pieces of handling restriction information for document that are different in contents and are applied, depending upon the timing at which the user acquired the document from the document management system.

The document management system 100 is configured to include a document management apparatus 101 and a database 102, and the database 102 stores a document which is to be handled by the client PC 400 at a processing step on the workflow. In addition, the document information, for the document stored in the database 102 is managed and stored by the document management apparatus 101.

The document management apparatus 101 manages the document information, such as the document name, the date of preparation, the preparer, and the like, for the document in association with the document identification information (hereafter, referred to as the "document ID") for uniquely identifying the document stored in the database 102

The document information is further provided with the handling restriction information which restricts the handling of the document identified by the document ID, and this handling restriction information is information which, as stated above, is applied when the user handles the document, using the client PC 400, at a particular processing step on the workflow.

The handling restriction information provides policy information prepared on the basis of the security policy, being information which defines the handling to be restricted or that to be permitted. For example, it can be information which, for the security policy realized by the encryption processing or the user authentication processing, designates the cryptogram key to be used in the encryption processing or the contents of the handling which is permitted to the user who was authenticated by the user authentication processing.

The access ticket management apparatus 200 generates an access ticket including the handling restriction information which restricts the handling of the document when the handling is performed by the user using the client PC 400 at a particular processing step on the workflow by the workflow system 300, and manages it. The access ticket includes the handling restriction information which establishes the contents of the handling restriction (the access right) according to the processing step at which the document is handled, or the state of the utilization by the handler, or the like, in addition to the decryption key which provides decryption information for decrypting the document as the handling object

The access ticket is generated and managed at each processing step on the workflow, or may be generated when the acquisition request for an access ticket is sent from the client PC 400 through the workflow system 300.

When performing the document handling at a particular processing step on the workflow by the workflow system 300, the client PC 400 requests an access ticket of the access ticket management apparatus 200 through the workflow system 300, and decrypts the document with the decryption key included in the access ticket received from the access ticket management apparatus 200 for allowing the handling by the user using the client PC 400 at the processing step on the basis of the handling restriction information which is also included therein.

FIG. 4 gives one example of workflow by the workflow system 300

The workflow as shown in FIG. 4 is a workflow which indicates the processing transition until, on the basis of the product information document (hereafter, to be referred to as the "document 1") on which an estimate was prepared for a certain product, the product is delivered, and the after follow for the product is provided, and the workflow is made up of four processing steps, i.e., an "estimate examination step 40", an "after-ordering consultation step 41", an "after-delivery processing step 42", and a "repair step 43", with the status making a transition in this order.

For each processing step, the processing which is to be carried out for the document is established, and by handling the document on the basis of the handling restriction information included in the access ticket acquired from the access ticket management apparatus 200, the processing is implemented.

Once the processing on the workflow is started, the document as the handing object for the user is acquired at each processing step from the document management apparatus 101 through the workflow system 300 to be stored in each client PC.

First, at the estimate examination step 40, which is a step for examining the estimate on the "document 1" for a certain product, the order destination to which the product is to be ordered is examined and selected based on the contents of the estimate. For example, as a result of the examination of the estimations made by three companies, e.g., "Company A, Company B, and Company C", the processing of selecting the Company A as the requestee who is requested to supply the product is carried out At this time, the "Company A, Company B, and Company C" corresponds to the client PC 400 in FIG. 1, respectively

This estimate examination step 40 provides a status in which each company has acquired the "document 1" for locally storing it, and is capable of handling on the basis of the handling restriction information included in the access ticket. Let's assume that, at this estimate examination step 40, the "Company A" has been selected as the order destination. The handling restriction information which provides such a restriction that handling of the "document 1" by the other "Company B" and "Company C" is inhibited is registered to the document management system 100.

Then, once the handling restriction information on the basis of the processing carried out at the estimate examination step 40 is registered to the document management system 100, the workflow system 300 makes a step transition to the next step.

The after-ordering consultation step 41, which is to follow the estimate examination step 40, is a step at which, a consultation is to be made with the order destination about the delivery of the product, and the processing of preparation for the delivery of the product is carried out. With the transition to this step, the handling restriction information which provides such a restriction that handling of the "document 1" by the "Company B" and "Company C" is inhibited is update-registered to the document management system 100

For example, the processing of determination of making a consultation with the "Company A", which has been selected as the order destination, about until when the product is to be delivered in what form is carried out At this after-ordering consultation step 41, as the handling restriction information for the document 1, it has been established that only the "Company A" is capable of handling the document 1, and thus the Company B and the Company C are denied to handle the "document 1" at this after-ordering consultation step 41 by the handling restriction information which has been update-registered.

At this after-ordering consultation step 41, with the ordering to the "Company A" being confirmed, the handling restriction information which provides such a restriction that handling of the "document 1" by the "Company A" is inhibited is registered to the document management system 100

Once the handling restriction information on the basis of the processing carried out at the after-ordering consultation step 41 is registered to the document management system 100, the workflow system 300 makes a step transition to the next step.

The after-delivery processing step 42, which is to follow the after-ordering consultation step 41, is a step at which the processing after the product is delivered is carried out. With the transition to this step, the handling restriction information which provides such a restriction that the handling of the "document 1" by not only the "Company B" and "Company C", but also the "Company A" is inhibited is update-registered to the document management system 100. Therefore, at this step, any of the three companies which were requested to make estimation is restricted by the handling restriction information so as to be impossible to handle the "document 1", and only the requester of the estimation is in the status in which handling of "document 1" is possible. This estimation requester also corresponds to the client PC 400 in FIG 1.

At this after-delivery processing step 42, the preparation in case where a maintenance request for the product is made after the delivery of the product is carried out, for example. With the maintenance request being made by the Company A, the handling restriction information which provides such a restriction that handling of the "document 1" by the Company A is again made possible is registered to the document management system 100. Once the handling restriction information on the basis of the processing carried out at the after-delivery processing step 42 is registered to the document management system 100, the workflow system 300 makes a step transition to the next step

The repair step 43, which is to follow the after-delivery processing step 42, is a step at which maintenance of the delivered product is to be made. With the transition to this step, the handling restriction information with which the handling of the "document 1" by the "Company A" is permitted is update-registered to the document management system 100. Therefore, at this repair step 43, the handling restriction information which permits only the Company A to handle the "document 1" is established, and it is possible for the Company A to handle the "document 1" when making maintenance of the delivered product At this repair step 43, update, alteration, or the like of the "document 1" on the maintenance of the product is made.

Thus, the handling of the document is restricted by the handling restriction information according to a particular processing step In case where the user joins at the middle of a particular processing step, the handling restriction information according to the step at which the user has joined is registered to the document management system 100.

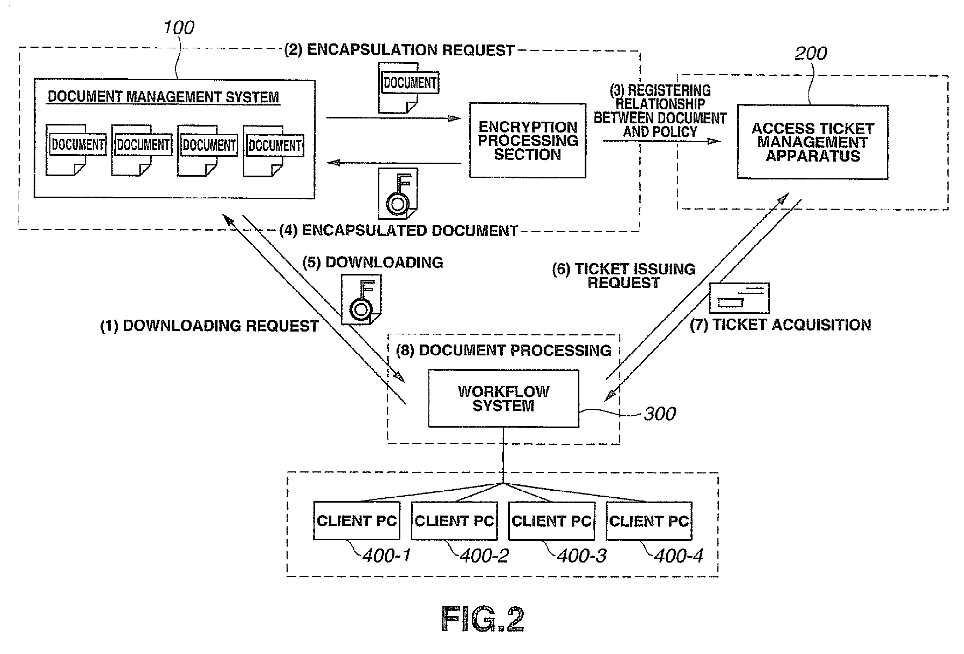

FIG 2 is a schematic configuration drawing illustrating the overview of the handling restriction information management system in the embodiment of the present invention.

FIG. 2 shows three nodes, i.e., the document management system 100, the access ticket management apparatus 200, and the workflow system 300, and the encryption processing section, which is included in the document management system 100, is shown, being separated from the document management system 100 for convenience of explanation.

First, the workflow system 300 is a system which carries out the processing as the document makes a transition on the workflow composed of one or more processing steps, as described above, and the client PC which is operated by the user in charge of a particular processing step on this workflow sends a downloading request for the document to be processed to the document management system 100 (1)

This downloading request also includes the user authentication information, in which the user who handles the document with the client PC is designated. The document management system 100 which has received the downloading request searches for the document as the downloading request object, and on the basis of the handling restriction information for the pertinent document, sends an encryption request (an encapsulation request) to the encryption processing section (2).

Next, the encryption processing section carries out the encryption processing for the encryption request, using a prescribed encryption algorithm with the cryptogram key. This cryptogram key makes a pair with the decryption key for decrypting the encrypted document, and is prepared in the encryption processing.

When the encrypted document (hereafter to be referred to as the "encapsulated document") is prepared with the document being encrypted, the identification information for the encapsulated document prepared, the decryption key for decrypting the document which is identified by the identification information, and the handling restriction information are registered to the access ticket management apparatus 200 (3).

And, the encryption processing section sends the encrypted encapsulated document to the document management system 100 as the requester (4). By the way, the encryption processing section which has made encryption of the document is included in the document management system 100, thus the decryption key prepared in the encryption processing section is being registered to the document management system 100.

And, the document management system 100 transfers the encapsulated document to the workflow system 300 (5) Thereby, the workflow system 300 is in the status in which the document which provides the handling object has been downloaded

Then, the workflow system 300 sends an access ticket issuing request to the access ticket management section 200 (6). This access ticket includes information which allows the handling of the downloaded document based on the handling restriction information at the pertinent processing step on the workflow. Examples include the decryption key for decrypting the encrypted document, and the handling restriction information for the pertinent processing step

The access ticket management section 200, when having received an access ticket issuing request from the workflow system 300, prepares and sends an access ticket which specifies the processing step at which the downloaded document is to be handled, the handling which is permitted to the handling user, and the decryption key (7).

The workflow system 300 which has received the access ticket manages the access ticket, and on the basis of the handling restriction information included in that access ticket, the client PC handles the document (8)

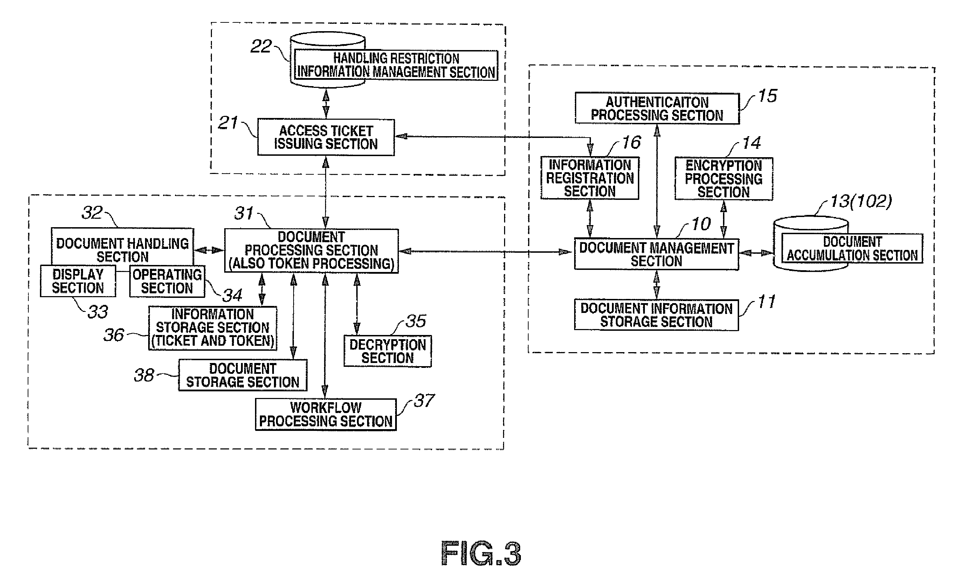

FIG. 3 is a block diagram illustrating the detailed configuration of the handling restriction information management system in the embodiment of the present invention.

The handling restriction information management system as shown in FIG. 3 is configured to include a document management section 10, a document information storage section 11, a document accumulation section 13, an encryption processing section 14, an authentication processing section 15, an information registration section 16, an access ticket issuing section 21, a handling restriction information management section 22, a document processing section 31, a document handling section 32, a display section 33, an operating section 34, a decryption section 35, an information storage section 36, and a workflow processing section 37.

The system scheme as shown in FIG. 1 gives an example in which the processing in the document management section 10, the document information storage section 11, the document accumulation section 13, the encryption processing section 14, the authentication processing section 15, and the information registration section 16 is implemented by the document management system 100; the processing in the access ticket issuing section 21, and the handling restriction information management section 22 is implemented by the access ticket management apparatus 200; the processing in the document handling section 32, the display section 33, the operating section 34, and the document storage section 38 is implemented by the client PC 400; and the processing in the document processing section 31, the decryption section 35, the information storage section 36, and the workflow processing section 37 is implemented by the workflow system 300.

The document handling section 32 includes a display section 33 and an operating section .34; causes the document accumulated in the document accumulation section 13 to be displayed on the display section 33; and carries out the document handling in the operating section 34.

The document handling section 32 is implemented by the client PC 400 in FIG. 1, for example. In other words, the display section 33 is configured by the display in the client PC 400, or the like, for displaying the document as the handling object, and the like. In addition, the operating section 34 is configured by the keyboard, the pointing device, and the like, which are operated by the user in using the client PC 400, for giving handling instruction for the document. In this operating section 34, operation for inputting the user ID and the pass word for authenticating the user as the handle of the document are performed, and the user authentication is carried out by making communications with the authentication server, and the like.

The workflow processing section 37 manages the workflow implemented by the workflow system 300 in FIG. 1, and manages the processing which is to be provided at the respective processing steps on the workflow.

This workflow processing section 37 manages the processing steps constituting the workflow (as exemplified in FIG 4, the "estimate examination step 40", the "after-ordering consultation step 41 ", the "after-delivery processing step 42", and the "repair step 43"); the processing information for each processing step; the order of processing among the processing steps (the transition is made in the order of the "estimate examination step 40", the "after-ordering consultation step 41", the "after-delivery processing step 42", and the "repair step 43"), and the like.

The processing information for a particular processing step is composed of the status of the document as the handling object, the user who is permitted to do handling, the contents of the processing to be implemented, and the like.

The document processing section 31 carries out the processing for the document to be handled in the document handling section 32 on the basis of the workflow managed in the workflow processing section 37 The document processing section 31 sends a document request including the information for the processing step on the workflow (the information for identifying the acquisition timing), the handling document at that processing step, and further the user information on which the user as the handler was verified, and an access ticket issuing request to the document management section 10 and the access ticket issuing section 21, respectively.

In addition, this document processing section 31 acquires the document as the handling object that is accumulated in the document accumulation section 13 from the document management section 10, and stores it in the document storage section 38. In addition, the document processing section 31 receives the access ticket including the handling restriction information for the pertinent document and the decryption key from the access ticket issuing section 21, and then the handling of the document is allowed

The document processing section 31 stores the access ticket issued by the access ticket issuing section 21 in the information storage section 36, and using the decryption key included in the stored access ticket, sends a decryption request for the document as the handling object stored in the document storage section 38 to the decryption section 35.

Thereby, the decrypted document is made possible to be handled in the document handling section 32.

The document management section 10 receives a document request from the document processing section 31, and processes that document request. When a document acquisition request has been sent from the document processing section 31, the document management section 10 sends an authentication request to the authentication processing section 15 for determining whether the user information included in that acquisition request is correct. Once the user information has been verified in the authentication processing section 15, from the information for the processing step on the workflow (the information for identifying the acquisition timing) and the user information on which the user was verified (including the information for the group to which the user belongs) that are included in that request, the document management section 10 identifies the document as the handling object, and acquires the pertinent document from the document accumulation section 13.

When the document has been identified from the document accumulation section 13, the document management section 10 prepares information which designates the handling restriction information to be applied at the processing step on the workflow, and stores it in the document information storage section 11. The handling restriction information stored in the document information storage section 11 is the handling restriction information to be applied when the document accumulated in the document accumulation section 13 is to be directly handled.

On the other hand, in case where the document stored in the document storage section 38 is to be handled, the handling restriction information included in the access ticket stored in the information storage section 36 provides the handling restriction.

In this connection, this document accumulation section 13 is implemented by the database 102 as shown in FIG 1.

When the document has been acquired from the document accumulation section 13, the document management section 10 sends an encryption request for the document to the encryption processing section 14. The encryption processing section 14 encrypts the document, using the cryptogram key with a prescribed encryption algorithm.

The document management section 10 sends the encrypted document to the document processing section 31 as the requester. The document management section 10 sends a registration request for the handling restriction information to be used by the document handling section 32 in handling the document to the information registration section 16, and the information registration section 16 stores the relationship between the document and the handling restriction information in the handling restriction information management section 22 through the access ticket issuing section 21.

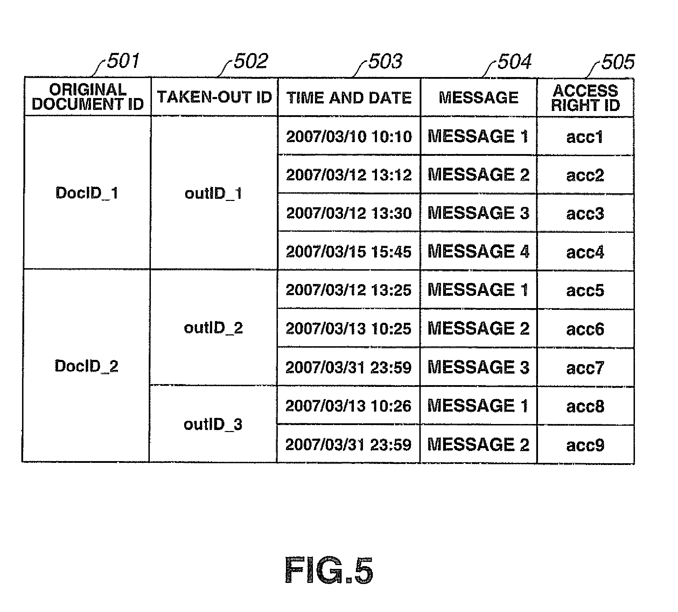

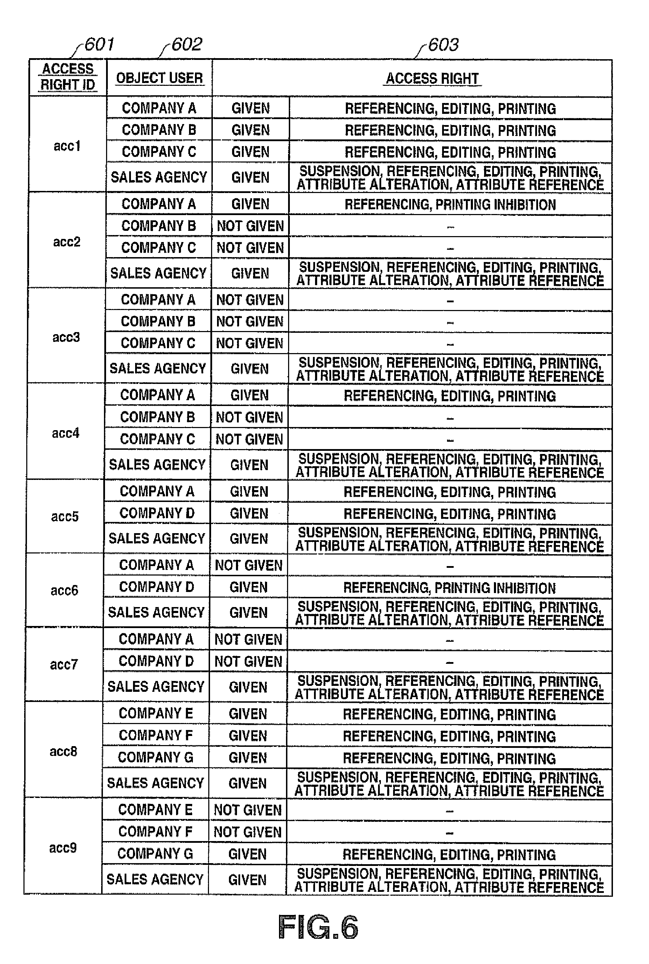

The handling restriction information management section 22 manages the information for identifying the handling restriction information for the document as shown in FIG. 5, and the history information in which the relationship between the handling restriction information and the document as shown in FIG 6 is stored.

When the access ticket issuing section 21 issues an access ticket, these pieces of information are used for preparing the access ticket.

Further, the document handling section 32 gives an instruction for altering the handling restriction information stored in the document information storage section 11 through the document processing section 31. Thereby, the document management section 10 alters an item of the handling restriction information stored in the document information storage section 11.

Of course, the system may be configured such that, with the time and date of the alteration, and the handling restriction information after the alteration being previously specified, and when the specified alteration time and date has come, the document management section 10 alters the item of the handling restriction information.

When the handling restriction information stored in the document information storage section 11 has been altered, the document management section 10 sends an alteration request for the handling restriction information, as shown in FIG 6, that is managed in the handling restriction information management section 22 to the information registration section 16, and the information registration section 16 alters the handling restriction information in the handling restriction information management section 22, and registers it

And, when the access ticket issuing section 21 has received an access ticket issuing request from the document processing section 31, the access ticket issuing section 21 selects an optimum piece of handling restriction information from the handling restriction information managed by the handling restriction information management section 22 on the basis of the information for the processing step on the workflow that is included in that issuing request, and prepares an access ticket including the selected handling restriction information and the decryption key. Then, by sending that access ticket to the document processing section 31, the access ticket issuing section 21 issues the access ticket.

The document processing section 31 registers the access ticket in the information storage section 36 for restricting the handling of the document by the document handling section 32.

Next, with reference to FIG 5 and FIG. 6, the handling restriction information which is applied to the document handled by the document handling section 32 will be described.

FIG 5 is a table giving the information set for a document which is handled at respective processing steps on the workflow as shown in FIG 4 in time series, and the table provides an alteration history for the information set for the document.

The table in FIG 5 is made up of an "original document ID" item 501, a "taken-out ID" item 502, a "time and date" item 503, a "message" item 504, and an "access right ID" item 505, and indicates that the handling restriction information for the identification information as given in the "access right ID" item 505 for which the time and date in the "time and date" item 503 is the latest is applied to the identification information as given in the "original document ID" item 501.

The "original document ID" item 501 provides identification information for the document managed by the document management apparatus 101, and the "taken-out ID" item 502 provides information for identifying the document which is being taken out from the database 102 for a prescribed handling operation in the client PC 400 on the basis of the processing step on the workflow by the workflow system 300.

The "time and date" item 503 provides information representing the time and date when the acquisition timing was altered with the processing step proceeding; the "message" item 504 provides a message displayed at the time when the processing step has proceeded; and the "access right ID" item 505 provides identification information for identifying the handling restriction information for the document handled in the client PC 400 at the processing step on the workflow by the workflow system 300.

The message as given in the "message" item 504 provides updated content information which indicates that the handling restriction information for restricting the handling of the document has been updated, and for this message, the alteration information indicating the alteration of the handling restriction information is given. Specifically, the handling restriction information including the alteration information is displayed on the display section 33 for notification

In an example as given in FIG. 5, the identification information for identifying the document stored in the database 102 is "DocID_1" as given in the "original document ID" item 501, and the document ID which has been newly adopted for handling the document identified with this "DocID_1" in the client PC 400 on the basis of the workflow by the workflow system 300 is "outID_1", which indicates that it has been recorded in the "taken-out ID" item 502.

In addition, the table indicates that, for the document identified by this "outID_1", the acquisition timing was altered at the time and date of "2007/03/10 10:10", "2007/03/12 13:12", "2007/03/12 13:30", and "2007/03/15 15:45" as given in the "time and date" item 503. In other words, it is indicated that the processing step for handling the pertinent document made a transition.

First, it is indicated that, at the time and date of "2007/03/10 10:10", the workflow started at the estimate examination step 40, and the identification information for the handling restriction information for handling the document at this estimate examination step 40 is given as "acc1" in the "access right ID" item 505.

Next, it is indicated that, at the time and date of "2007/03/12 13:12", the status made a transition to the after-ordering consultation step 41, and the identification information for the handling restriction information for handling the document at this after-ordering consultation step 41 is given as "acc2" in the "access right ID" item 505.

Further, it is indicated that, at the time and date of "2007/03/12 13:30", a transition to the after-delivery processing step 42 is made, and the identification information for the handling restriction information for handling the document at this after-delivery processing step 42 is given as "acc3" in the "access right ID" item 505.

And, it is indicated that, at the time and date of "2007/03/15 15:45", the status made a transition to the repair step 43, and the identification information for the handling restriction information for handling the document at this repair step 43 is given as "acc4" in the "access right ID" item 505.

Next, the table in FIG. 6 is made up of an "access right ID" item 601, an "object user" item 602, and an "access right" item 603, and indicates the handling restriction information for restricting the handling of a document.

The "access right ID" item 601 provides identification information for identifying the handling restriction information, and corresponds to the "access right ID" 505 as shown in FIG 5. The "object user" item 602 provides information indicating the user as the application object for the handling restriction information, and the "access right" item 603 provides information indicating the contents of the handing restriction which is to be applied at the time of handling the document

For example, it is indicated that the handling restriction information for which the "access right ID" item 601 is "acc1" specifies the contents of the handling restriction of "referencing, editing, printing" as given in the "access right" item 603 for "Company A" as the object user as given in the "object user" item 602; specifies the contents of the handling restriction of "referencing, editing, printing" for "Company B" as the object user; specifies the contents of the handling restriction of "referencing, editing, printing" for "Company C" as the object user; and specifies the contents of the handling restriction of "suspension, referencing, editing, printing, attribute alteration, attribute reference" for the "sales agency" as the object user

Likewise, it is indicated that the handling restriction information for which the "access right ID" item 601 is "acc2" specifies the contents of the handling restriction of "referencing, printing inhibition" as given in the "access right" item 603 for "Company A" as the object user as given in the "object user" item 602; specifies the handling restriction that any type of handling is denied for "Company B" as the object user, and also for "Company C" as the object user, and specifies the contents of the handling restriction of "suspension, referencing, editing, printing, attribute alteration, attribute reference" for the "sales agency" as the object user.

From the explanation as given above with reference to FIG. 5 and FIG. 6, a different piece of handling restriction information can be provided for a document at each processing step (at each acquisition timing) on the workflow as shown in FIG. 4.

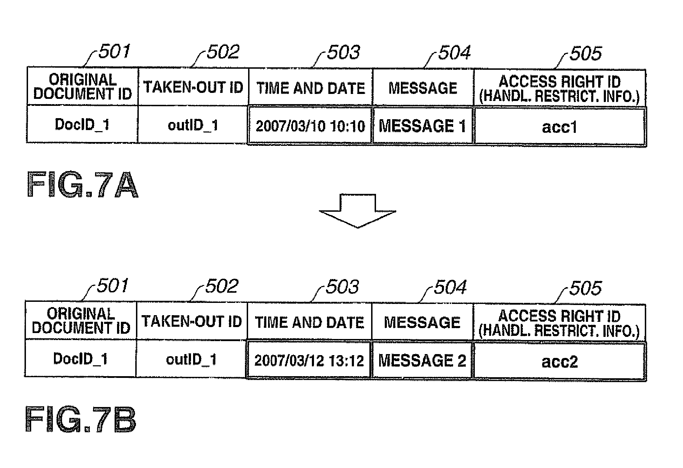

FIG. 7A and FIG 7B are modified examples of the table as given in FIG. 5 that indicates the information set for a document which is handled at respective processing steps on the workflow in time series.

While FIG. 5 gives an example in which various pieces of information set for a document are managed in time series, FIG. 7A and FIG. 7B give a scheme in which only the latest piece of information of the pieces of information that were set for a document as the handling object is managed. As is the case with FIG 5, the table as given in FIG 7A and FIG 7B is made up of an "original document ID" item 501, a "taken-out ID" item 502, a "time and date" item 503, a "message" item 504, and an "access right ID" item 505.

FIG 7A gives information set at the acquisition timing of the estimate examination step 40 on the workflow as shown in FIG. 4, and FIG. 7B gives information set at the acquisition timing of the after-ordering consultation step 41 which follows the estimate examination step 40.

In other words, the "time and date" item 503, the "message" item 504, the "access right ID" item 505 have been altered; as the time and date when the step was altered from the estimate examination step 40 to the after-ordering consultation step 41, "2007/03/12 13:12" is given in the "time and date" item 503 in FIG. 7B; the message which was displayed at that time is given in the "message" item 504; and the handling restriction information for the after-ordering consultation step 41 is given in the "access right ID" item 505 as "acc2".

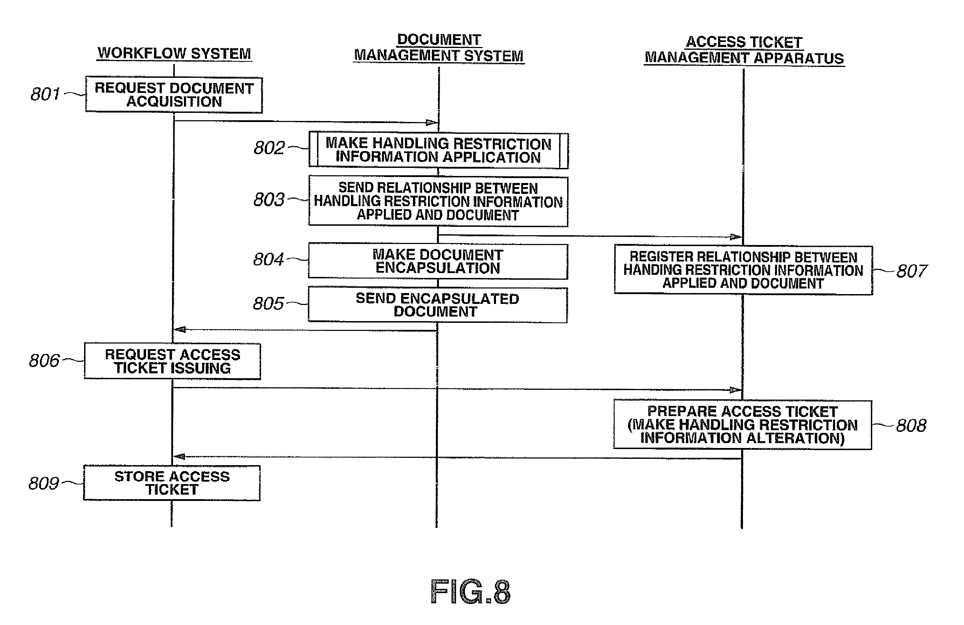

FIG 8 is a sequence diagram illustrating the status transition of the handling restriction information management system in the embodiment of the present invention.

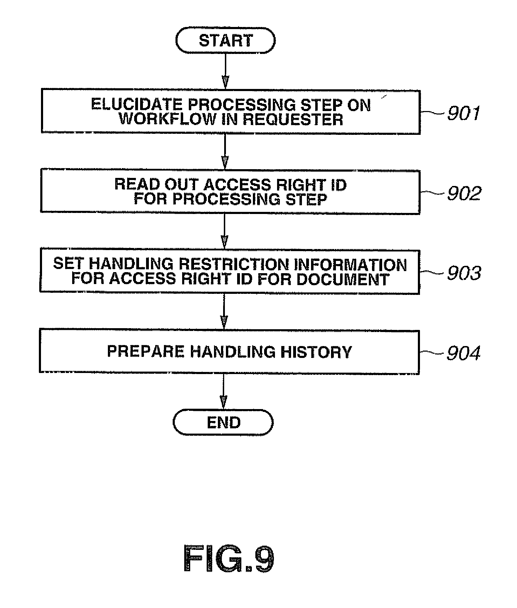

In FIG. 8, first, at a processing step on the workflow, the workflow system requests the document to be handled by the client PC to the document management system (801). The document management system which has received this request carries out the processing of applying the handling restriction information for the requested document to that document (802). The details of this application processing is illustrated in FIG. 9.

When the handling restriction information has been applied to the document, the relationship between the handling restriction information applied and the document is sent to the access ticket management apparatus (803).

In addition, the document management system encrypts the handling restriction information, using the cryptogram key, to prepare an encapsulated document (804), and sends the encapsulated document prepared to the workflow system as the requester (805).

Upon receipt of the document, the workflow system sends an access ticket issuing request to the access ticket management apparatus for handling that document (the encapsulated document) (806).

The access ticket management apparatus registers the relationship between the handling restriction information and the document that has been received from the document management system (807), and when the access ticket issuing request has been received from the workflow system, the access ticket management apparatus prepares an access ticket from the information registered (808) This preparation processing provides the processing of preparing an access ticket according to the state of the utilization of the access ticket requester, and on the basis of the information for the processing step in the workflow system as the requester, and the information for the user as the handler, prepares an access ticket including the handling restriction information for the document and the decryption key.

The access ticket management apparatus, which has prepared the access ticket, sends it to the workflow system, and the workflow system stores that access ticket (809).

In this manner, an optimum access ticket according to the processing step on the workflow and the user is stored, and by using this, the document can be handled.

FIG. 9 is a flowchart illustrating the details of the processing of setting the handling restriction information to be applied to the document in the handling restriction information management system in the embodiment of the present invention

The handling restriction information alteration processing as shown in FIG 9 is carried out by the document management apparatus 101 in the document management system 100 as shown in FIG 1, and when a document acquisition request has been received from the workflow managing apparatus 301 in the workflow system 300, the processing is started.

First, the information for the processing step for processing the pertinent document included in the document acquisition request from the workflow managing apparatus 301 is analyzed (901). It is elucidated which of the "estimate examination step 40", the "after-ordering consultation step 41", the "after-delivery processing step 42", and the "repair step 43" is the processing step on the workflow as shown in FIG. 4.

Next, the access right ID for designating the handling restriction information in handling the document at the processing step elucidated is read out (902). When the access right ID has been read out, the handling restriction information designated by that access right ID is set as the handling restriction information to be applied to the document (903).

And, as the history information, a handling history of setting the handling restriction information for the document is prepared (904).

With the present invention, the above-mentioned operation can be implemented using a handling restriction information management system having communications capabilities, or from the recording medium (CD-ROM, DVD-ROM, and the like) which stores programs for constituting the above-mentioned means, the programs may be installed into the computer for causing it to implement them, in order to constitute a handling restriction information management system which can implement the above-mentioned processing. To the computer which constitutes the handling restriction information management system, a CPU (Central Processor Unit), an ROM (Read Only Memory), an RAM (Random Access Memory), and a hard disk are connected through a system bus. The CPU follows the programs stored in the ROM or the hard disk for carrying out the processing, using the RAM as the work area.

In addition, the medium for supplying the programs may be a communication medium (a medium, such as a communication line or a communication system, which temporarily or fluidly holds the programs). For example, the programs may be posted on the BBS (Bulletin Board Service) on the communication network to be distributed through the communication line

The foregoing description of the exemplary embodiment of the present invention has been provided for the purposes of illustration and description. It is not intended to be exhaustive or to limit the invention to the precise forms disclosed. Obviously, many modifications and variations will be apparent to practitioners skilled in the art. The embodiment was chosen and described in order to best explain the principles of the invention and its practical applications, thereby enabling others skilled in the art to understand the invention for various embodiments and with the various modifications as are suited to the particular use contemplated It is intended that the scope of the invention be defined by the following claims and their equivalents.

## Claims

1. A handling restriction information management system, comprising:
a document management apparatus which manages a document, and
a document handling apparatus which acquires and handles the document managed by the document management apparatus;
wherein:
the document management apparatus comprises:
a handling restriction information management section which, in correspondence with the transition of processing steps on a flow of a plurality of works utilizing a document, updates and manages handling restriction information for restricting the handling of the document; and
a handling restriction information issuing section which, on the basis of a timing at which the document was acquired by the document handling apparatus, issues the handling restriction information managed by the handling restriction information management section to the document handling apparatus;
and
the document handling apparatus comprises:
a handling restriction section which, on the basis of the handling restriction information issued by the handling restriction information issuing section, restricts the handling of the document.

2. The handling restriction information management system of claim 1, wherein the document management apparatus further comprises:
an updating history management section which manages an updating history of the handling restriction information managed by the handling restriction information management section.

3. The handling restriction information management system of claim 2, wherein
the updating history management section stores and manages updated content information which pertains to the update of the handling restriction information in correspondence to the handling restriction information managed by the handling restriction information management section;
the handling restriction information issuing section issues handling restriction information including the updated content information stored in the updating history management section;
the document handling apparatus comprises:
a notification section which, on the basis of the updated content information included in the handling restriction information issued by the handling restriction information issuing section, notifies the update of the handling restriction information

4. The handling restriction information management system of claim 3, wherein the notification section, when the handling restriction information for a specific handler is altered, on the basis of the updated content information, prepares alteration information indicating the alteration of the handling restriction information, and notifies it to the specific handler.

5. The handling restriction information management system of claim 1, wherein the document handling apparatus comprises:
a decryption section which, after having acquired an encrypted document from the document management apparatus, acquires handling restriction information including decryption information for decrypting the encrypted document issued by the handling restriction information issuing section of the document management apparatus, and decrypts the encrypted document on the basis of the decryption information included in the handling restriction information.

6. A handling restriction information management method, comprising:
acquiring and handling a managed document;
in correspondence with the transition of processing steps on the flow of work for a plurality of works utilizing a document, updating and managing handling restriction information for restricting the handling of the document;
on the basis of a timing at which the document is acquired, issuing the managed handling restriction information; and
on the basis of the handling restriction information issued, restricting the handling of the document.

7. A handling restriction information management program executable by a computer to perform a process, the process comprising:
acquiring and handling a managed document;
in correspondence with the transition of processing steps on the flow of work for a plurality of works utilizing a document, updating and managing handling restriction information for restricting the handling of the document;
on the basis of a timing at which the document is acquired, issuing the managed handling restriction information; and
on the basis of the handling restriction information issued, restricting the handling of the document.
